# EUROPEAN PATENT SPECIFICATION

(11) **EP 3 566 837 B1**
(45) Date of publication and mention of the grant of the patent: **26.01.2022**
(21) Application number: 19172686.8
(22) Date of filing: 06.05.2019
(51) Int. Cl.: B27D 1/04, C08L 91/00, B27K 3/02, B05D 7/06

(54) **A METHOD FOR TREATING A PLYWOOD BOARD AND A PLYWOOD BOARD**
VERFAHREN ZUR BEHANDLUNG EINER SPERRHOLZPLATTE UND SPERRHOLZPLATTE
PROCÉDÉ DE TRAITEMENT D'UN PANNEAU DE CONTREPLAQUÉ ET PANNEAU DE CONTREPLAQUÉ

(30) Priority: 07.05.2018 FI 20184089 U
(43) Date of publication of application: 13.11.2019
(73) Proprietor: UPM Plywood Oy, 15140 Lahti (FI)
(72) Inventor: KOSKI, Anna, 15610 LAHTI (FI); HÄRKÖNEN, Riku, 15240 LAHTI (FI)
(74) Representative: Berggren Oy

(56) References cited:
- EP-A1- 3 272 522
- DE-U1-202015 103 202
- ALINA LOZHECHNIKOVA ET AL: "Toward energy efficiency through an optimized use of wood: The development of natural hydrophobic coatings that retain moisture-buffering ability", ENERGY AND BUILDINGS, vol. 105, 15 October 2015 (2015-10-15), pages 37-42, XP055456672, CH ISSN: 0378-7788, DOI: 10.1016/j.enbuild.2015.07.052

## Description

### Field of the invention

The invention relates to plywood boards. The invention relates to weatherproof plywood boards. The invention relates to methods for waterproofing plywood boards.

### Background

Plywood is commonly used as a construction material. When plywood is stored outdoors, a problem is caused by wetting of the plywood, whereby microbial flora can grow in the plywood and/or on its surface. This gives rise to *e.g.* defects in the colouring of the plywood. Furthermore, the plywood swells when wet, which is why the plywood may be deformed, for example by warping and/or swelling. Solutions for reducing this problem are known, such as film faced plywood, in which the surface of the plywood has been treated to be waterproof. However, waterproof plywood boards are typically not breathable. Therefore, if the board is wetted *e.g.* at its edge, it dries very slowly, which promotes microbial growth in the wetted area. Furthermore, the waterproof surface disrupts the wood's capacity to buffer moisture. A sufficient moisture buffering capacity is desired from construction materials for indoor use.

Moreover, it has been found that often moisture penetrates into a plywood board from a side edge. As indicated above, this affects warping and swelling of the whole board. However, in particular, when the edge is provided with a tongue and a groove, the swelling of the tongue has the effect that the tongue may not fit within a corresponding groove.

DE202015103202U1 discloses a method for treating a plywood board by applying paraffin wax on a surface thereof which has been sanded. "Toward energy efficiency through an optimized use of wood: The development of natural hydrophobic coatings that retain moisture-buffering ability" by Lozhechnikova et al. discloses a method for treating a wooden board by applying a coating comprising wax particles as to obtain a moisture buffering value of more than 1g/m²RH%.

### Summary

The present invention is directed to a method according to present claim 1 and a plywood board according to present claim 8. The present disclosure presents a plywood board which is simultaneously breathable and water-repellent. The water-repellent surface means, for example, that rainwater will not remain to wet the surface of the plywood. The breathability means that moisture penetrated into the board can also evaporate from the surface. Furthermore, the breathability secures sufficient moisture buffering in some uses. To put it more precisely, the method for manufacturing such a plywood board will be presented in claim 1 and the plywood board according to the present invention will be presented in claim 9.

A plywood board may be treated from its main surface, which has a normal to the direction of thickness of the board. Such solutions are summarized e.g. in the numbered examples 101 and 201. Alternatively, a plywood board may be treated from its edge surface, which has a normal that is perpendicular to the direction of thickness of the board. Such solutions are summarized e.g. in the numbered examples 102 and 202. A plywood board may be treated from both its main and edge surface. Such solutions are summarized e.g. in the numbered examples 104 and 204.

### Brief description of the drawings

The invention will be described by means of the appended drawings, in which
- Fig. 1a: shows a plywood board in a side view;
- Fig. 1b: shows dimensions of a plywood board of Fig. 1a;
- Fig. 2: illustrates treatment of a plywood board with a hydrofobizing agent;
- Fig. 3: illustrates sanding of a plywood board, which may be one step in the processing of the plywood board;
- Fig. 4a: illustrates, in a side view, treatment of a main surface of a plywood board with a hydrofobizing agent;
- Fig. 4b: illustrates, in an end view, treatment of a main surface of a plywood board with a hydrofobizing agent;
- Fig. 5a: illustrates, in a side view, treatment of an edge surface of a plywood board with a hydrofobizing agent;
- Fig. 5b: illustrates, in an end view, treatment of an edge surface of a plywood board with a hydrofobizing agent;
- Fig. 6a: illustrates, in a side view, treatment of a main surface and an edge surface of a plywood board with a hydrofobizing agent;
- Fig. 6b: illustrates, in an end view, treatment of a main surface and an edge surface of a plywood board with a hydrofobizing agent;
- Figs. 7a to 7j: illustrate, in a side view, edges of a plywood board provided with a tongue and a groove;
- Figs. 8a and 8b: illustrate, in a side view, fibre direction of the wood veneer layer of a plywood board;
- Fig. 9: illustrates, in a side view, edges of a plywood board provided with a tongue and a groove; and
- Figs 10a to 10e: illustrate, in a side view, plywood boards that are only partly cross laminated.

The directions Sx, Sy, and Sz indicate three orthogonal directions.

### Description of embodiments

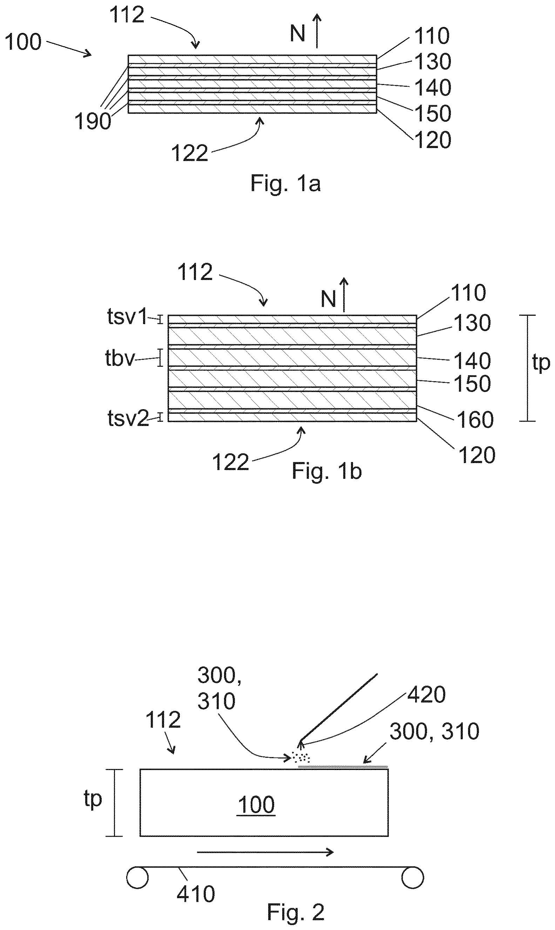

This description presents a method for treating a plywood board to make it more resistant to moisture, and a plywood board made by the method. Figures 1a and 1b show side views of a plywood board 100 which may be treated, or which may already have been treated. The structure of the plywood board 100 is largely the same, irrespective of whether it has been treated or not. As will be shown below, the treatment may make the face veneer layers thinner, if the treatment comprises sanding (i.e. abrading, i.e. grinding). Furthermore, the treatment comprises applying a treatment agent 300 which contains a hydrofobizing agent 310, onto the surface of the plywood board 100. Alternatively the treatment may comprise applying the hydrofobizing agent 310 directly onto the surface of the plywood board 100. The treatment agent 300 is a dispersion or an emulsion of the hydrofobizing agent 310.

With reference to Fig. 1a, the plywood board 100 comprises a first wood veneer layer 110, a second wood veneer layer 120, and adhesive 190 between said wood veneer layers (110, 120). As is well known, the plywood board 100 may comprise several wood veneer layers (e.g. 130, 140, 150) and adhesive 190 between the wood veneer layers. Adhesive 190 is interposed between the wood veneer layers in the direction of the thickness tp of the plywood 100. The thickness tp of the board 100 refers to the smallest of the three dimensions of the board 100 which are perpendicular to each other. The term "adhesive" refers to the adhesive agent used for joining the veneers, irrespective of the way of curing or otherwise binding the wood veneer layers to form the plywood board 100. The adhesive 190 may be, for example, a suitable resin, such as a phenolic resin; or a suitable thermoplastic material may be used as the adhesive. The plywood board 100 comprises a first surface 112 and a second surface 122 opposite to the first surface 112. The normal N of the first surface 112 is unidirectional with the thickness tp of the plywood board 100. In this description, the wood veneer layers are designated so that the first wood veneer layer 110 is the face veneer. In other words, the first wood veneer layer 110 constitutes the first surface 112 (see Figs. 1a and 1b).

For treating the plywood board 100, hydrofobizing agent 310 is provided. According to the invention, the hydrofobizing agent 310 is selected from substances which, when applied onto the first surface 112, increase the hydrofobicity of said first surface 112 so that the contact angle between the treated first surface 112 and water is at least 110 degrees, more advantageously at least 125 degrees, such as at least 130 degrees. Substances of this kind will be described in more detail hereinbelow.

In the treatment, the hydrofobizing agent 310 is applied onto at least the first surface 112 of the plywood board 100, for example in the form of a treatment agent 300 (that is, contained the treatment agent 300). According to the invention, the hydrofobizing agent 310 is applied onto the first surface 112 in such an amount that the moisture buffering value (MBV) of the treated plywood board 100, measured according to the Nordtest guideline to be described hereinbelow, is at least 0.5 g/(m²%RH), more advantageously at least 0.6 g/(m²%RH).

As presented above, a sufficiently high moisture buffering value (MBV) guarantees breathability of the surface. Furthermore, the moisture buffering value indicates the capacity of the surface to balance the moisture content in an environment with variable humidity. For example, when used indoors, a board having a high moisture buffering value is capable of balancing short-term variations in humidity which might be caused by, for example, bathing, drying of clothes, or dish washing. Such a property is commonly desired from indoor construction materials.

Figure 2 illustrates the application of a hydrofobizing agent 310 and/or a treatment agent 300, such as an aqueous dispersion 300 or emulsion 300 of the hydrofobizing agent 310, onto the first surface 112. For example, the agent 300, 310 may be sprayed onto the surface 112 by means of a nozzle 420. The plywood board 100 may be moved in relation to the nozzle 420 by, for example, a conveyor 410. Alternatively or in addition, the hydrofobizing agent 310 or treatment agent 300 may be applied onto the surface 112 by means of a roller, a brush, or a paint brush, or it can be doused (e.g. poured) onto the surface 112.

The plywood board 100 treated in this way comprises said wood veneer layers (110, 120, 130, 140, 150) and adhesive 190 between the wood veneer layers so that some adhesive 190 is interposed between the first wood veneer layer 110 and the second wood veneer layer 120 in the thickness direction of the plywood board 100. As shown in Figs. 1a and 1b, other wood veneer layers of the plywood board may be interposed between the wood veneer layers 110, 120.

After the plywood board 100 has been treated in the above described way, some hydrofobizing agent 310 is applied on its first surface 112 to increase its hydrofobicity, whereby the first surface 112 becomes hydrofobic. The first surface 112 is hydrophobic so that the water contact angle of the first surface 112 is at least 110 degrees, the water contact angle being measured in a way to be described hereinbelow. More advantageously, the water contact angle of the first surface 112 is at least 125 degrees and most advantageously at least 130 degrees, measured in the way to be described hereinbelow.

For measuring the contact angle, a drop of water (that is, three drops of water) is (are) provided on the first surface 112, and the contact angle(s) of the drop(s) of water, that is, the angle(s) formed by the surface of each drop of water with the first surface 112, is (are) measured. It may take some time for the drop of water to assume a permanent shape on the surface 112. The contact angle may be measured 5 seconds after applying the drop of water onto the surface 112. In practice, a device suitable for this measurement is used, such as KSV CAM200 (Contact Angle Meter). The size of the drop may be significant. In measurements of the contact angle, a drop having a volume of 6.5 µl is used. The contact angle is measured at room temperature 25°C. The water used is ultrapure water which is often called Millipore water. Such water is classified as type 1 water in the standard ISO 3696. The purity of the water is indicated by, for example, its electrical resistivity. The resistivity of the water used, ultrapure water, is 18 MΩ×cm at the temperature of 25 °C. When determining the contact angle, the complete Young-Laplace equation is used for interpreting the image. Three single contact angles are measured in the above described way by placing three different drops of water in different points on the first surface 112, and the average of these single contact angles is presented as the contact angle.

Not only the treatment but also the roughness of the treated surface affects the contact angle. Therefore, the first surface 112 of the plywood board 100 is sanded (i.e. abraded, i.e. ground). Advantageously, the first surface 112 is hydrofobic so that said contact angle is at least 110 degrees, measured in the above described way, and the roughness Ra of the first surface 112 is from 2 µm to 20 µm, such as from 3 µm to 16 µm, such as from 5 µm to 14 µm, where the roughness is measured in a way to be described further below. More advantageously, the first surface 112 is hydrofobic so that said contact angle is at least 125 degrees, measured in the above described way, and the roughness Ra of the first surface 112 is from 2 µm to 20 µηι, such as from 3 µm to 16 µm, such as from 5 µm to 14 µηι, where the roughness is measured in a way to be described further below. Most advantageously, the first surface 112 is hydrofobic so that said contact angle is at least 130 degrees measured in the above described way, and the roughness Ra of the first surface 112 is from 2 µm to 20 µm, such as from 3 µm to 16 µm, such as from 5 µm to 14 µm, where the roughness is measured in a way to be described further below. The roughness of the surface, and providing it by *e.g.* sanding, will be described in more detail further below.

The plywood board 100 is advantageously treated so that the moisture buffering value of the plywood board 100 is not substantially changed, at least not reduced, by the treatment. After the plywood board 100 has been treated in the above described way, its moisture buffering value (MBV) is at least 0.5 g/(m2%RH), measured according to the Nordtest guideline. The Nordtest guideline refers to the measuring instructions described in "Moisture Buffering of Building Materials", Technical University of Denmark, Report BYG-DTU R-126, 2005 (ISSN 1601 - 2917; ISBN 87-7877-195-1), particularly its Appendix A. More advantageously, the moisture buffering value (MBV) of the treated board, measured according to the Nordtest guideline, is at least 0.6 g/(m²%RH), preferably at least 0.7 g/(m²%RH). The figures are given at the accuracy of one significant figure.

Because the manufacture of the plywood board 100 has included subjecting it to hot pressing, its moisture buffering value (MBV) is typically not very high, unlike the value for *e.g.* sawn timber. The treatment of the first surface 112 with an aqueous dispersion may even increase the moisture buffering value. It is possible that the wetting of the first surface in the treatment is a factor here. In an embodiment, the moisture buffering value (MBV) of the treated plywood board (100), measured according to the Nordtest guideline, is not higher than 1.5 g/(m²%RH), such as not higher than 1.1 g/(m²%RH), or not higher than 1.0 g/(m²%RH). Correspondingly, in an embodiment of the method, the plywood board 100 is treated so that the treated board will have an MBV of from 0.5 g/(m²%RH) to 1.5 g/(m²%RH), such as from 0.6 g/(m²%RH) to 1.1 g/(m²%RH).

According to the Nordtest guideline, five of the six faces (four lateral faces and the second surface 122) of a rectangular piece of plywood board (having a recommended size of at least 100 mm × 100 mm) are protected from the absorption of moisture, whereby only the first surface 112 is breathable to moisture. The sample is placed in an environmental chamber. The sample is stabilized at a temperature of 23±5°C and at a relative humidity of 50±5 %RH until its mass is stabilized. After this, the relative humidity of air in the environment of the sample is varied in cycles, being 33% for 16 h and then 75% for 8 h in the environmental chamber. The cycle is repeated and the change in the mass of the board is measured after each dry and each humid period. The temperature is 23±0.5°C during the test. The test is repeated for as many cycles as it takes to decrease the variation in the mass change to a value below five percent, calculated for the last three cycles. From the mass change, a moisture buffering value is calculated for the surface area and for the difference in relative humidity, as presented in said guideline (point A.1.6). The result is given in units of g/(m²%RH), as presented above.

The test is carried out for a board 100 according to the invention so that the first surface 112 is not covered in the test, and the other surfaces as covered as described above. In other words, the first surface 112 is allowed to pass moisture through it in the test. Thus, the moisture buffering particularly through the first surface 112 of the board 100 is measured in the test. If it were otherwise not clear which of the faces of the board 100 to be tested would be said first surface 112, the direction of fibres on the first surface 112, which is thus left freely breathable in the test, is transverse to the normal of the first surface over the whole area of the first surface. Correspondingly, not even any part of the first surface 112 is formed of such sawn surface whose normal would be parallel to the grain direction. Thus, any such sawn surfaces which have been formed by sawing, whereby the normal of the sawn surface is parallel to the grain direction, are covered in the test. The veneers of the plywood board are normally made by lathing or semi-lathing. Consequently, the first surface 112 is produced by lathing, after which the first surface is sanded. Sanding will be described in more detail hereinbelow. Furthermore, treatment agent is provided on the first surface 112.

When processing the plywood board, its first surface 112 is advantageously sanded before hydrofobizing agent 310 is applied onto the first surface 112 of the plywood board 100. Alternatively, the first surface 112 may be sanded by the board manufacturer when hydrofobizing agent 310 is applied onto the first surface 112 of the plywood board 100. Sanding first after the application of the hydrofobizing agent 310 would unnecessarily remove some hydrofobizing agent 310 from the surface of the board 100. Sanding has been found to be associated with the hydrofobicity of the surface 112, through the roughness of the surface. Interaction between the treated surface 112 and water is affected by the roughness of the surface as well. For this reason, according to the invention, the first surface 112 of the plywood board 100 has been sanded or is sanded to a roughness which, expressed in Ra -value, is 2 µm or more. The measurement of the surface roughness and its expression in Ra value is described in the standard ISO 4287 (e.g. version 1997/Amd.1:2009(en)). By definition, Ra is the average of absolute deviations of the surface level from the average surface level. The measurements can be taken with, for example, an Innovatest TR-200 device. With this device, the surface level can be measured by means of a sharp diamond needle where the tip of the needle has a radius of 5 µm. The roughness of the samples in Table 1 were measured in this way. In this way, it is possible to measure roughness values of 16 µm and lower. Higher surface roughness values can be measured by using other devices in a corresponding way. The measurement is taken over a length of at least 2.5 mm on the surface to be measured. The measurement is taken on a typical surface section, in other words, for example in a point which does not comprise a knot or another defect. For example, the fibre direction has not been found to have a significant effect on the surface roughness. The Ra values mentioned above and to be mentioned hereinbelow refer to values measured according to said standard. Advantageously, the roughness Ra of the first surface 112 is from 2 µm to 20 µm, such as from 3 µm to 16 µm, such as from 5 µm to 14 µm.

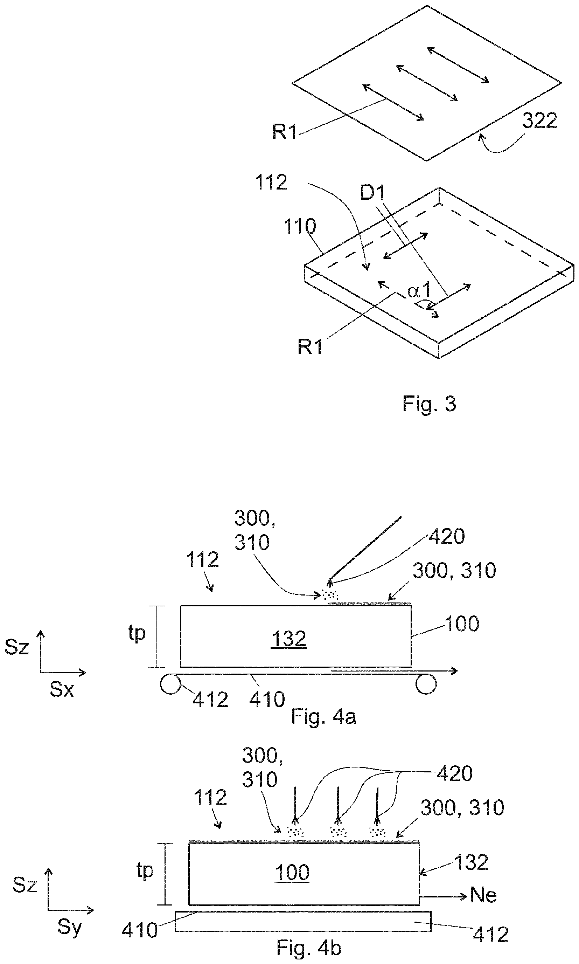

With reference to Fig. 3, the first surface 112 of the plywood board 100 can be sanded by a first sanding surface 322, such as abrasive paper 322. Advantageously, a sanding surface is used whose roughness according to the standard ISO 6344 is from P20 to P220, more advantageously from P40 to P120, and most advantageously from P40 to P80. Advantageously, the sanding is carried out in two steps by first applying an sanding surface having a roughness of from P40 to P60 and then applying an sanding surface having a roughness of from P60 to P120. When sanding the surface 112, the sanding surface 322 is moved in a direction R1 with respect to the first surface 112 (Fig. 3). As is well known, the wood in the face veneer layer 110 (that is, the first wood veneer layer 110 to be sanded) comprises fibres having a fibre direction D1 (Fig. 3). Advantageously, the first surface 112 is sanded so that the direction R1 forms an angle α1 of at least 30 degrees with the direction D1. For example, the sanding direction R1 may be perpendicular to the fibre direction D1. The sanding direction may have an effect on the quantity of hydrofobizing agent 310 that has to be applied onto the first surface 112.

According to the invention, the roughness of the first surface 112 of the treated plywood board 100, expressed in Ra value, is at least 2 µηι, advantageously at least 3 µm. According to the invention, the roughness of the first surface 112 of the treated plywood board 100, expressed in Ra value, is not higher than 20 µm, such as from 2 µm to 20 µm, such as from 3 µm to 16 µm, such as from 5 µm to 14 µm.

The second surface 122 opposite to the first surface 112 may be treated, and is advantageously treated, in a corresponding way. Thus, what has been said about the water contact angle of the first service 112 applies to the water contact angle of the second surface 122 as well. However, this will have no effect on the moisture buffering value, because the second surface 122 is also covered from the effects of moisture in the test. In an embodiment, hydrofobizing agent 310 is provided on the second surface 122 of the treated plywood board 100, to increase the hydrofobicity of the second surface 122. The second surface 122 may be sanded as well. The second surface 122 may be sanded to the same roughness as the first surface 112.

In a plywood product, adhesive 190 is typically less permeable to moisture than are the wood veneers 110, 120, 130, 140, 150, or the adhesive 190 is not permeable to moisture at all. For this reason, the moisture buffering value is particularly affected by the thickness tsv1 of the face veneer 110 (see Fig. 1b). Advantageously, the thickness tsv1 of the face veneer 110 is from 0.5 mm to 4.0 mm, such as from 0.5 mm to 3.5 mm. Also, the thickness tp of the whole plywood board 100 (Fig. 1) may affect the moisture buffering value. Advantageously, the thickness tp of the plywood board 100 is from 5 mm to 30 mm. Typically, the plywood board 100 is made of veneers whose thickness tbv before sanding of the board is substantially the same, for example from 1 mm to 4 mm, such as from 1.4 mm to 3.6 mm. Due to the sanding in an embodiment, the thickness tsv1 of the face veneer 110 is smaller than the thickness tbv of a middle veneer (130, 140, 150). The middle veneer refers to a veneer interposed between two other wood veneers in the thickness direction of the board 100. The thickness tsv2 of the second face veneer 120 may be substantially equal to the thickness tsv1 of the above mentioned face veneer 110.

In the above described way, hydrofobizing agent 310 is provided on the first surface 112 of the plywood board 100 to increase the hydrofobicity of the first surface 112. According to the invention, hydrofobizing agent 310 is applied onto the first surface in an amount of from 0.1 g/m² to 20 g/m². This amount has been found to be sufficient to make the first surface sufficiently hydrofobic. However, the breathability (expressed as the MBV) may be affected if a very high amount is applied. More advantageously, the hydrofobizing agent 310 is applied onto the first surface in an amount of from 0.5 g/m² to 10 g/m², or from 1 g/m² to 5 g/m². Correspondingly, the amount of hydrofobizing agent on the first surface 112 of the treated plywood board 100 is from 0.1 g/m² to 20 g/m², such as from 0.5 g/m² to 10 g/m², such as from 1 g/m² to 5 g/m². As will be presented below, the treatment agent 300 may be applied in a significantly higher amount, and when the carrier of the treatment agent 300 is evaporated, the hydrofobizing agent 310 will remain on the first surface 112.

As mentioned above, the hydrofobizing agent 310 refers to a group of substances which, when applied onto the first surface 112, increase the hydrofobicity of said first surface 112. In particular, it refers to a dry substance free from a carrier, such as water. It is obvious that a solvent or another carrier, if one is used, will evaporate in time from the surface of the treated board 100. Advantageously, the hydrofobizing agent 310 is applied in the form of a treatment agent 300, in which treatment agent 300 the hydrofobizing agent 310 is mixed or dissolved in a carrier, such as water. Advantageously, in the treatment agent 300, the hydrofobizing agent 310 is mixed in water.

Advantageously, the hydrofobizing agent 310 is applied onto the first surface in the form of an emulsion or a dispersion, wherein the treatment agent 300 is an emulsion or a dispersion of the hydrofobizing agent 310. This has been found to be associated with breathability. It has been found that a completely even surface which could be provided by using e.g. a film, would not be breathable. It is possible that applying a solution might also produce a completely even surface which would not necessarily be very breathable.

According to the invention, the treatment agent 300 is an aqueous emulsion or an aqueous dispersion of the hydrofobizing agent 310. The hydrofobizing agent 310 is thus applied in the form of an aqueous emulsion 300 or an aqueous dispersion 300 onto the first surface. The aqueous emulsion 300 or aqueous dispersion 300 comprises water as the carrier fluid, and the hydrofobizing agent 310. Using an aqueous emulsion 300 or an aqueous dispersion 300 gives at least two advantages. Firstly, the emulsion and dispersion have the advantage that the actual hydrofobizing agent 310 is in the form of particles, whereby the hydrofobizing agent 310 provides the first surface 112 with such a treatment that water vapour can pass through the particles. This has been found to be associated with the breathability of the first surface. Using particularly water as the carrier fluid for the dispersion or emulsion gives the advantage that water vapour can evaporate through said surface 112, and the surface 112 can dry out. Secondly, water is an inexpensive and non-toxic carrier, and it does not damage plywood. Correspondingly, in a treated plywood board 100, the hydrofobizing agent 310 is selected from such substances which are applicable in the form of an aqueous emulsion 300 or an aqueous dispersion 300.

The aqueous emulsion 300 or aqueous dispersion 300 may comprise not only water (carrier fluid) and the hydrofobizing agent 310 but also one or more substances for improving its (300) stability, such as starch, cationic starch, cationic synthetic polymer, aliphatic amine and/or epichlorohydrin-dimethylamine copolymer. The content of said stabilizer in the aqueous emulsion 300 or aqueous dispersion 300 may be, for example, from 0.01 wt-% to 20 wt-%, such as from 0.1 wt-% to 10 wt-%. Alternatively or in addition, the aqueous emulsion 300 or aqueous dispersion 300 may comprise not only water (carrier fluid) and the hydrofobizing agent 310 but also one or more such coupling agents which promote the coupling of the hydrofobizing agent 310 to wood, such as the surface 112. Such coupling agents include, for example, aluminium sulphate and polyaluminium chloride. The coupling agent is not necessarily a part of the aqueous dispersion or emulsion, but it can be applied separately onto the first surface 112, for example before the application of the hydrofobizing agent.

In an embodiment, the hydrofobizing agent 310 is applied onto the first surface 112 or surfaces 112, 122 in the form or micro or nano particles. As presented above, the agent 310 is advantageously applied in the form an aqueous dispersion 300 or an aqueous emulsion 300 of micro or nano particles. In this context, a micro particle refers to a particle in the size of from 1 µm to 10 µm. In this context, a nano particle refers to a particle in the size of from 10 nm to 1 µm. Consequently, the particle size is advantageously from 10 nm to 10 µηι, such as from 100 nm to 1 µm. In a treated plywood board 100, the hydrofobizing agent 310 is provided on the first surface 112 or surfaces (112, 122) in the form or micro or nano particles.

In terms of applying, such as spraying, rolling, dousing, brushing, or coating, it is advantageous that a sufficient amount of treatment agent 300 (such as a solution, dispersion or emulsion of the hydrofobizing agent 310) is applied. Such a sufficient amount is advantageously at least 5 g/m², calculated per surface area to be treated; more advantageously at least 10 g/m² or at least 20 g/m². Consequently, in an advantageous embodiment, said treatment agent, such as aqueous emulsion 300 or aqueous dispersion 300, is applied in an amount of at least 5 g/m², at least 10 g/m², or at least 20 g/m², such as from 5 g/m² to 150 g/m², such as from 10 g/m² to 120 g/m², such as from 20 g/m² to 100 g/m², calculated per surface area to be treated.

In the light of the above mentioned amounts to be applied, the content of hydrofobizing agent 310 in the treatment agent 300, such as aqueous emulsion 300 or dispersion 300, is advantageously between 1% and 50%, such as between 5% and 40%, such as between 15% and 35%, where the share (%) indicates percentage by mass (wt-%). Such a content may be achieved by increasing the proportion of water in the aqueous dispersion or emulsion (that is, by diluting). With a suitable diluting rate (*i.e.* content of hydrofobizing agent), it is made sure that:
- the amount of treatment agent 300 (such as aqueous dispersion or emulsion) to be applied is sufficient to secure even application;
- the amount of hydrofobizing agent 310 on the first surface 112 is sufficient; and
- the amount of carrier (such as water) to be applied on the first surface 112 is not too high, to avoid unnecessary drying.

As the hydrofobizing agent 310, it is possible to use e.g. various waxes, waxy substances, oils, and/or resins, such as paraffin wax, alkyl ketene dimer, coniferous oil based substances, and coniferous wood rosin based substances. As an oil, it is possible to use a natural oil (that is, an oil of biological origin) or a synthetic oil, or a mixture or solution thereof; or a mixture or solution of various natural oils; or a mixture or solution of various synthetic oils. As a resin, it is possible to use a natural resin (that is, a resin of biological origin) or a synthetic resin, or a mixture of them; or a mixture of various natural resins; or a mixture of various synthetic resins. According to the invention, a wood-based substance is used as the hydrofobizing agent 310. Examples of wood-based substances include e.g., tall oil based products (such as crude tall oil, distilled tall oil, tall oil fatty acid, tall oil resin acid, tall oil pitch, tall oil soap) and coniferous wood rosin, which may be chemically fortified, modified or saponified, if necessary. For example, the rosin used may be resin adhesive isolated from the pitch of a coniferous tree (or coniferous trees). For example, the rosin used may be coniferous wood rosin isolated from the pitch of a coniferous tree (or coniferous trees). As a raw material for resin adhesive, it is possible to use tall oil resin which is obtained by distilling crude tall oil obtained as a by-product of sulphate pulp production process . As a raw material for coniferous resin it is possible to use tall oil resin which is obtained by distilling crude tall oil obtained as a by-product of sulphate pulp production process. As a raw material for resin adhesive, it is possible to use gum rosin tapped from wood. As a raw material for coniferous wood rosin, it is possible to use gum rosin tapped from wood. Advantageously, the resin used as the hydrofobizing agent contains abietic and/or pimaric acid or acids.

Particularly advantageously, the hydrofobizing agent 310 is coniferous wood rosin or a derivative thereof, such as fortified, modified or saponified coniferous wood rosin. The reactivity of resin adhesive may be improved by bonding carboxylic groups to it by means of organic acids, whereby fortified resin is obtained. Resin adhesives can be saponified by means of a base, such as lye. The reactivity of coniferous wood rosin may be improved by bonding carboxylic groups to it by means of organic acids, whereby fortified resin is obtained. Coniferous wood rosin can be saponified by means of a base, such as lye.

Any of the above mentioned hydrofobizing agents 310 can be applied in the method, whereby some of it is left on the first surface 112 of the plywood board 100. Such an agent 310 may be used in the form of an aqueous dispersion 300 or aqueous emulsion 300 in the method. Such an agent 310 may be used in the form of an aqueous dispersion 300 or aqueous emulsion 300 of micro or nano particles in the method.

It has been found that the treatment presented above is particularly suitable for softwood. Therefore, in an embodiment, said first wood veneer layer 110 constitutes said first surface 112, and the first wood veneer layer 110 comprises spruce or fir. In the Finnish language, the word "kuusi", i.e. spruce or fir, refers to a group of several wood species. In particular, the first wood veneer layer 110 may comprise spruce or fir which comes from a tree belonging to the *Picea* family. In particular, the first wood veneer layer 110 may comprise European spruce (*Picea abies*)*.*

Advantageously, what has been said about the material of the first wood veneer layer 110 applies to the wood veneer layer (*e.g.* 120) forming said second surface 122 as well, particularly if the second surface 122 is also treated or has been treated in the above described way. Advantageously, what has been said about the material of the first wood veneer layer 110 applies to all of the wood veneer layers (110, 120, 130, 140, 150) as well. In an embodiment, all the wood veneer layers of the plywood board 100 are made of the same wood species. In an embodiment, all the wood veneer layers of the plywood board 100 comprise spruce or fir, such as *Picea,* such as *Picea abies.*

It is an advantage of the method that the treated plywood board does not need to be actively dried, nor does the hydrofobizing agent 310 have to be actively bonded to the first surface 112. For example, the treated plywood board 100 does not need to be heated for drying it or for bonding the hydrofobizing agent. In an embodiment of the method, the treated plywood board 100 is not heated to a temperature higher than 60°C, at least not before it is supplied to the customer.

As indicated above, the first surface 112 of the plywood board 100 may be treated with the hydrofobizing agent 310, or with the treatment agent 300 comprising the hydrofobizing agent 310. This has been shown in Figs. 2, 4a and 4b. Referring to Fig. 4a, the conveyor 410, which may be operated by rolls 412, may be configured to move the plywood board in a direction Sx (i.e. to right in the figure). In such a side view, a primary edge surface 132 of the plywood board 100 faces the reader. Fig. 4b shows the treatment in an end view, whereby in Fig. 4b, the primary edge surface 132 of the plywood board 100 faces to right, in the direction Sy, which is perpendicular to Sx. This disclosed in more specific terms in examples 101 and 201.

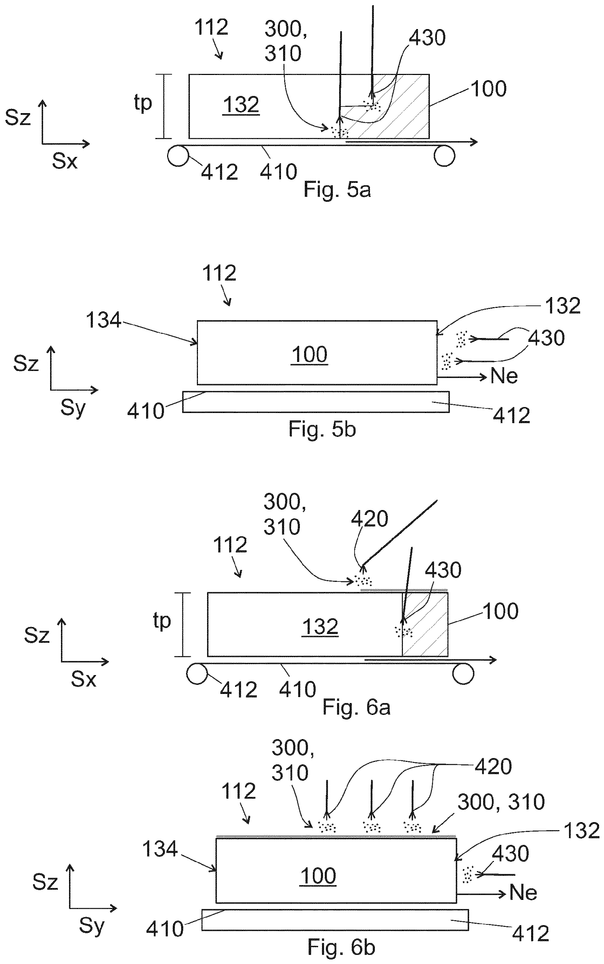

Moreover, irrespective of whether the first surface 112 is or has been treated, at least a primary edge surface 132 of the plywood board 100 may be treated in a method; and correspondingly, at least a primary edge surface 132 of the plywood board 100 may have been treated. This has been detailed in the annexed examples 102 and 202. This is also shown in Figs. 5a and 5b. Furthermore, both the first surface 112 and the primary edge surface 132 of the plywood board 100 may be treated or may have been treated, as disclosed in the annexed examples 104 and 204. This is also shown in Figs. 6a and 6b.

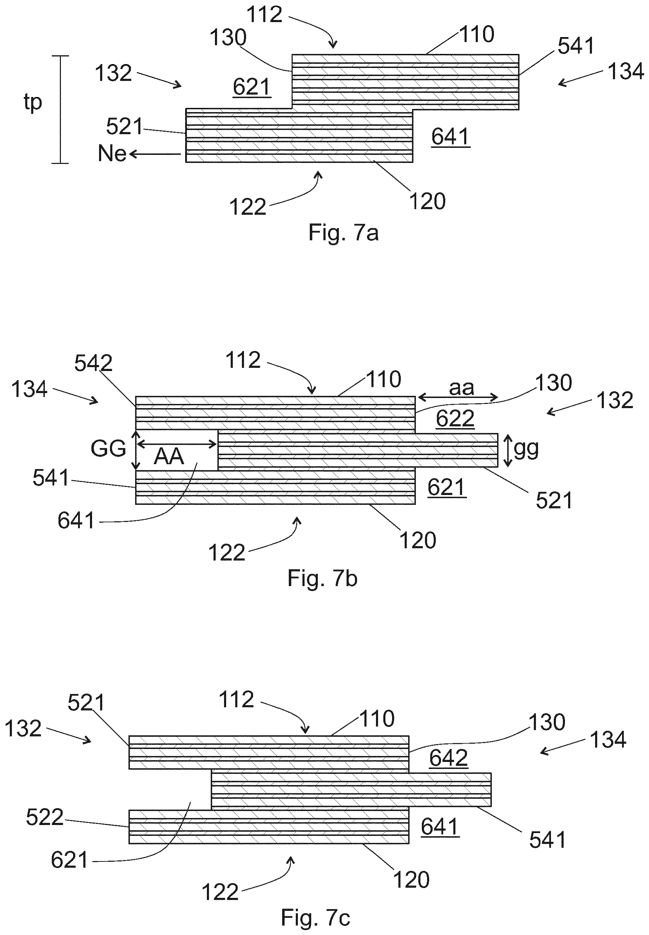

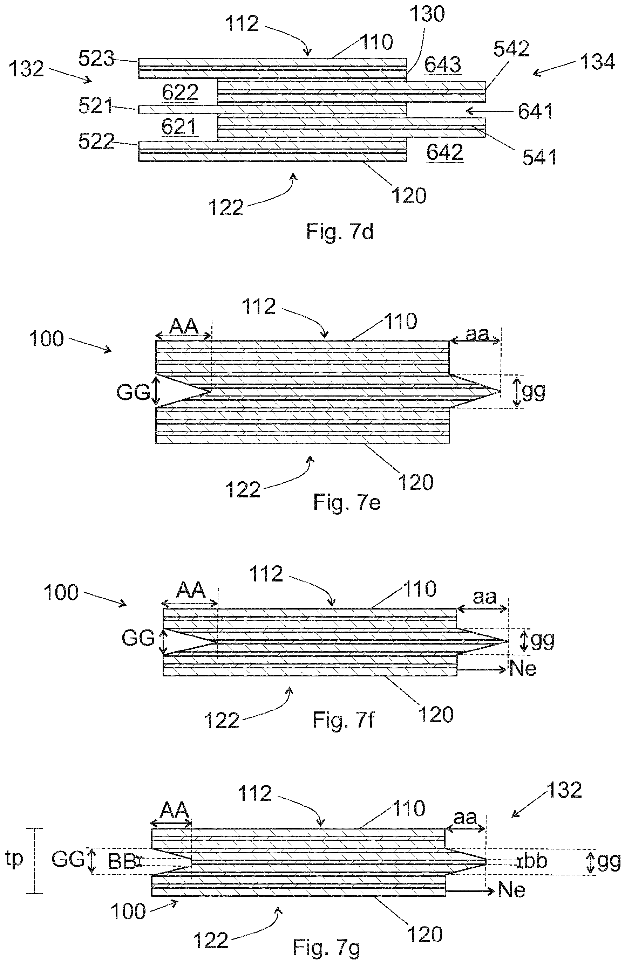

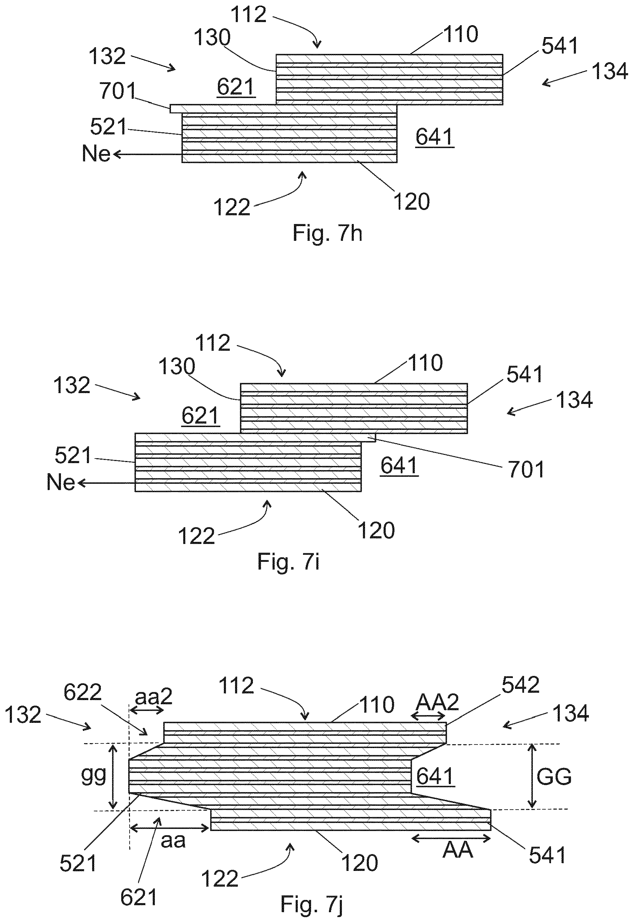

As indicated in Figs. 4a, 4b, 5a, 5b, 6a, and 6b, and above, the plywood board 100 comprises the first 110 and a second wood veneer layer 120, adhesive 190 between the wood veneer layers (110, 120, 130, 140, 150), the first surface 112 whose normal N is parallel to (i.e. unidirectional with) the thickness tp of the plywood board 100, and the second surface 122 opposite to the first surface 112. In addition, the plywood board comprises a primary edge surface 132. With reference to Figs. 7a to 7j, the a primary edge surface 132 may be machined in such a way that the primary edge surface 132 is not planar, e.g. it may comprise a tongue and a groove. However, at least a part of the primary edge surface 132 has a normal Ne that is perpendicular to the direction of thickness tp of the plywood board 100 (see Figs. 4b, 5b, 6b, and 7a). Typically, however, a ratio of such an area of the primary edge surface 132 that has normal Ne that is perpendicular to the direction of thickness tp of the board 100 to a such a cross sectional area of the primary edge surface 132 that the cross section has a normal to the direction Ne, is at least one third or at least a half. As an example, in Figs. 7e, 7f, 7g, and 7j some parts of the primary edge surface 132 have a normal that is neither unidirectional with the thickness tp nor perpendicular to the thickness tp, while some other parts have a normal Ne that is perpendicular to the direction of thickness tp of the board 100. In Fig. 7e, the aforementioned ratio would be two thirds. However, depending on the length aa of the tongue, an area of the edge surface may be large, even considerably larger than the aforementioned cross section. When the primary edge surface 132 comprises a tongue that has a constant height, as in Figs. 7a and 7b, a reasonably large portion of the primary edge surface 132 may have a normal that is unidirectional with the thickness tp of the board 100. In particular, if a length aa of the tongue is large compared to the thickness of the board and/or the primary edge surface 132 comprises multiple tongues. However, such a cross sectional area of the primary edge surface 132 that the cross section has a normal to the direction Ne, is independent of the size and shape of the tongue or groove.

It has been found that the plywood board 100 may take in water and/or moisture in particular from an edge surface 132. Typically the shape of the plywood board is rectangular, whereby the plywood board 100 typically comprises four edge surfaces, one of which is the primary edge surface 132. Thus, hydrofobizing the primary edge surface 132 will prevent the board 100 from getting moist from the edge. In particular, plywood boards are, in general, stored in reasonably large piles comprising e.g. tens or hundreds of plywood boards stacked on top of each other. In such a pile, the main surfaces 112 and 122 (see Fig. 1a) are protected from moisture by another plywood board of the pile (optionally also by the treatment agent 300); however, the edge surfaces 132, 134 are exposed to environment. Therefore, at least in piles, the moisture intake of the plywood boards 100 seems to occur primarily through the edge surfaces 132, 134, and the other edge surface, typically other two edge surfaces.

This has been observed to have to detrimental effects:
1. When the plywood boards of the pile take in moisture, the plywood boards tend to warp. In particular, the whole pile of the plywood boards tend to warp. Therefore, the quality of all the plywood boards of the pile are decreased, as they are not as straight in all directions, as expected.
2. (a) When the primary edge surface comprises a tongue, the tongue may become moist, which induces swelling and warping of the tongue. (b) Moreover as a groove is, in general limited by at least a tongue (see Figs. 7a and 7b), also the dimensions of the neighbouring groove are affected. Moreover, in general, when an edge surface 132 comprises a tongue, an opposite edge surface 134 comprises a matching groove (see Figs. 7b to 7g). However, because of the swelling and warping, the tongue may not fit into the matching groove. This problem could be circumvented by providing such large grooves, that also the swelled tongue would fit therein. However, this would reduce the strength of the mechanical locking between the tongue and the groove.

To overcome these problems, a method comprises applying the hydrofobizing agent 310, or treatment agent 300 comprising hydrofobizing agent 310, onto at least the primary edge surface 132 of the plywood board 100. To overcome these problems, in an embodiment of the plywood board 100, a hydrophobizing agent 310 has been provided on the primary edge surface 132 to increase its hydrophobicity. Due to the treatment, the primary edge surface 132 is hydrophobic. When the primary edge surface 132 has been treated, the primary edge surface 132 is hydrophobic so that the water contact angle with the primary edge surface 132 is at least 110 degrees. What has been said above about the measurement of the contact angle on the first surface 112 applies to the measurement of the contact angle on the primary edge surface 132.

The hydrofobizing agent 310, or treatment agent 300 comprising hydrofobizing agent 310, may be applied onto the primary edge surface 132 of the plywood board 100 in a similar manner as discussed above for applying it onto the first surface 112. More precisely, the hydrofobizing agent 310 or treatment agent 300 may be sprayed onto the edge surface 132 by means of a nozzle 430, as indicated in Figs. 5a, 5b, 6a, and 6b. The plywood board 100 may be moved in relation to the nozzle 430 by, for example, a conveyor 410 (see Figs. 5a to 6b). Alternatively or in addition, the hydrofobizing agent 310 or the treatment agent 300 may be applied onto the edge surface 132 by means of a roller, a brush, or a paint brush, or it can be doused (e.g. poured) onto the edge surface 132. Furthermore, the edge surface 132 may be dipped into the hydrofobizing agent 310 or the treatment agent 300.

As for the aforementioned detrimental effect (1), the primary edge surface 132 need not be provided by a tongue for the effect to occur. Thus, the primary edge surface 132 of the board 100 need not be provided with a tongue. As for the aforementioned detrimental effect (2)(a) a tongue may warp, even if the primary edge surface 132 is provided with only one tongue and only one groove, as in Figs. 7a, 7h, and 7i. Herein the term groove may refer to a groove of a half lap joint of Fig. 7a, well known in wood industry. Moreover, in case of a half lap joint, even if the tongue would fit the groove also after swelling, the resulting surface formed by two adjacent boards would comprise a step, which in general is not acceptable. As for the aforementioned detrimental effect (2)(b) a groove corresponding to a tongue may be arranged in between two tongues, as in Figs. 7b, 7c, 7d, 7e, 7f, 7g, and 7j, whereby, after swelling, the tongue does not necessarily fit in the corresponding groove.

In such an embodiment, wherein the treated plywood board 100 comprises a primary edge surface 132 with a tongue and groove, and the a primary edge surface 132 is provided with the hydrofobizing agent 310 or treatment agent 300 comprising hydrofobizing agent 310, the hydrofobizing agent 310 or treatment agent 300 is applied onto such a primary edge surface 132 of the plywood board 100 that comprises the tongue and the groove. In other words, the tongue and the groove are not machined after the application of the hydrofobizing agent 310 or the treatment agent 300. Such machining would remove also the hydrofobizing agent 310 from the edge surface 132. However, for clarity, the tongue and groove of the primary edge surface 132 are not shown in Figs. 5a, 5b, 6a, and 6b. A board 100 with an edge surface 132 having a tongue and a groove can be treated in a manner shown in Figs. 5a, 5b, 6a, and 6b.

Referring to Fig. 7a, in an embodiment, the primary edge surface 132 is provided with a primary first groove 621 and a primary first tongue 521. As for the terminology, a groove needs not be arranged in between two tongues. Moreover, a tongue needs not be arranged in between two grooves. For example, Figs. 7a, 7h, and 7i shows tongues (521, 541) and grooves (621, 641) suitable for a half lap joint well known to carpenters.

Referring to Fig. 7b, in an embodiment, the primary edge surface 132 is further provided with a primary second groove 622, and the primary first tongue 521 is arranged in between the primary first groove 621 and the primary second groove 622.

Referring to Fig. 7c, in an embodiment the primary edge surface 132 (of the embodiment of Fig. 7a) is further provided with a primary second tongue 522, and the primary first groove 621 is arranged in between the primary first tongue 521 and the primary second tongue 522.

Referring to Fig. 7d, in an embodiment the primary edge surface 132 (of the embodiment of Fig. 7b) is further provided with a primary second tongue 522, and the primary first groove 621 is arranged in between the primary first tongue 521 and the primary second tongue 522. Fig. 7d also shows a primary third tongue 523.

Preferably, the primary edge surface 132 is provided with a tongue-groove arrangement and a secondary edge surface 134, which is opposite to the primary edge surface 132, is provided with a matching groove-tongue arrangement, as indicated in Figs. 7a to 7g. More preferably, the primary edge surface 132 or the secondary edge surface 134 is provided with such a tongue-groove arrangement, wherein a groove is arranged in between two tongues, and the opposite edge surface 134, 132 is provided with matching groove-tongue arrangement, as indicated in Figs. 7b to 7g.

Referring to Figs. 7h and 7i, the primary edge surface 132 need not be provided with such a tongue-groove arrangement that matches a groove-tongue arrangement of the opposite secondary edge surface 134. In particular, an edge surface (132, 134) may be provided with a protrusion 701. As compared to a tongue, the protrusion 701 has a significantly smaller length than a tongue. Typically a length of the protrusion in less than 3 mm, more typically less than 2 mm. Moreover, as compared to a tongue, the protrusion 701 has a significantly smaller thickness than a tongue. Typically a thickness of the protrusion 701 in less than 3 mm, more typically less than 2 mm. A protrusion 701 may be used to take in such swelling of the plywood board 100 in use that occurs in the direction parallel to the plane of the plywood board 100. As indicated in Fig. 7h a protrusion 701 may be provided at a tip of a tongue (the tongue 521 in Fig. 7h). As indicated in Fig. 7i a protrusion 701 may be provided at a bottom of a groove (the groove 641 in Fig. 7i). Even if not shown in the figures, a protrusion 701 may be applied to a tongue and/or a groove in such a case, wherein the primary edge surface 132 is provided with a primary first groove 621, a primary second groove 622, and a primary first tongue 521, and wherein the primary first tongue 521 is arranged in between the primary first groove 621 and the primary second groove 622. Such edge surfaces are shown e.g. in Figs. 7b, 7d, 7g, and 7j. Correspondingly even if not shown in the figures, a protrusion 701 may be applied to a tongue and/or a groove in such a case, wherein the primary edge surface 132 is provided with a primary first groove 621, a primary first tongue 521, and a primary second tongue 522, and wherein the primary first groove 621 is arranged in between the primary first tongue 521 and the primary second tongue 522. Such edge surface is shown e.g. in Fig. 7c.

It is also noted that even if in Figs. 7h and 7i the primary edge surface 132 is not provided with such a tongue-groove arrangement that exactly matches the groove-tongue arrangement of the opposite secondary edge surface 134, also in this embodiment, the primary edge surface 132 is provided with such a tongue-groove arrangement that matches the groove-tongue arrangement of the opposite secondary edge surface 134 when the protrusion 701 or protrusions 701 is/are removed or fully compressed. In use, the protrusion 701 or protrusions 701 may be fully compressed because of swelling of two neighbouring boards 100.

As indicated above, a plywood board 100 comprises a secondary edge surface 134 opposite to the primary edge surface 132. As for the term "opposite", at least a part of the secondary edge surface 134 has a normal that is perpendicular to the direction of thickness tp of the plywood board 100 and reverse to the normal Ne (see Figs. 5b and 6b). Moreover, in an embodiment (see Figs. 7b, 7d, and 7j; and Figs. 7e to 7g even if shown without the refence numerals),
- the primary edge surface 132 is provided with a primary first groove 621, a primary second groove 622, and a primary first tongue 521, wherein the primary first tongue 521 is arranged in between the primary first groove 621 and the primary second groove 622, and
- the secondary edge surface 134 is provided with a secondary first tongue 541, a secondary second tongue 542, and a secondary first groove 641, wherein the secondary first groove 641 is arranged in between the secondary first tongue 541 and the secondary second tongue 542.

The primary first tongue 521 is arranged in between the primary first groove 621 and the primary second groove 622 in the direction of thickness tp of the plywood board 100. The secondary first groove 641 is arranged in between the secondary first tongue 541 and the secondary second tongue 542 in the direction of thickness tp of the plywood board 100. Moreover, the tongue-groove arrangement (521, 621, 622) of the primary edge surface 132 in these figures matches (i.e. is adapted to) the groove-tongue arrangement (641, 541, 542) of the secondary edge surface 134. As indicated above, they need not match each other at least when a protrusion 701 is applied.

Some measures of the primary first tongue 521 and the secondary first groove 641 are shown in Figs. 7b, 7e, 7f, 7g, and 7j. In an embodiment, the primary first tongue 521 has a primary length aa and a primary thickness gg; and the secondary first groove 641 has a secondary depth AA and a secondary height GG. As for the measures, the primary thickness gg is unidirectional with the thickness tp of the plywood board 100 and the secondary height GG is unidirectional with the thickness tp of the plywood board 100. As indicated above, at least a part of the primary edge surface 132 has a normal Ne that is perpendicular to the direction of thickness tp of the plywood board 100. The primary length aa is unidirectional with the normal Ne. In addition, the secondary depth AA is unidirectional with the normal Ne. As for the primary thickness gg, if the thickness of the tongue is not constant (as in Figs. 7e to 7g), the primary thickness gg refers to the maximum thickness. In such a case, a minimum thickness may be denoted by bb (see Fig. 7g). As for the secondary height GG, if the height of the groove is not constant (as in Figs. 7e to 7g), the secondary height GG refers to the maximum height. In such a case, a minimum height may be denoted by BB (see Fig. 7g).

When the primary edge surface 132 and preferably also the secondary edge surface 134 have been treated with the hydrophobizing agent 310 or the treatment agent 300 to increase its (their) hydrophobicity, problems related to swelling are reduced. Therefore, the tongue can be made large in comparison to the matching groove. If the edge surface(s) was/were not treated, the groove should be made substantially larger than the tongue in order to fit the tongue also after swelling. However, this would be detrimental for mechanically locking the tongue to the groove.

For these reasons, in an embodiment, the primary edge surface 132 has been treated with the a hydrophobizing agent 310 or treatment agent 300 to increase its hydrophobicity, and the tongue is made large in comparison to the matching groove. More specifically, in an embodiment a ratio (aa/AA) of the primary length aa to the secondary depth AA is at least 90%, e.g. from 90% to 100%. In addition or alternatively, in an embodiment, a ratio (gg/GG) of the primary thickness gg to the secondary height GG is at least 90% e.g. from 90% to 100%. In addition or alternatively, a ratio ([aaxgg]/[AAxGG]) of the product (aaxgg) of the primary length aa and the primary thickness gg to the product (AAxGG) of the secondary depth AA and the secondary height GG is at least 80% e.g. from 80% to 100%.

To obtain sufficient mechanical locking, in an embodiment, the primary length aa is from 8 mm to 45 mm, such as from 8 mm to 30 mm, such as from 8 mm to 15 mm and the secondary depth AA is from 8 mm to 45 mm, such as from 8 mm to 30 mm, such as from 8 mm to 15 mm. In an embodiment, the primary thickness gg is from 3 mm to 10 mm and the secondary height GG is from 3 mm to 10 mm.

Referring to Fig. 7j, when the primary edge surface 132 is provided with a primary first groove 621, a primary second groove 622, and a primary first tongue 521, wherein the primary first tongue 521 is arranged in between the primary first groove 621 and the primary second groove 622, the primary grooves 621, 622 need not be equally deep. Correspondingly, the primary first tongue 521 has a primary length aa or aa2, wherein the lengths aa and aa2 are different, depending on from which groove the primary length is measured (see Fig. 7j). As for the aforementioned measures for the primary length aa, these lengths are applicable to the at least one of the lengths measured from a bottom of a neighbouring groove 621, 622 to a tip of the tongue 521. Preferably the aforementioned measures are applicable to such a primary length aa that is measured from a tip of the tongue 521 to a bottom of the deeper groove (621 in Fig. 7j) of the two neighbouring grooves 621, 622. Correspondingly, the secondary depth AA of the secondary first groove 641 may depend on wherefrom the depth is measured. As indicated in Fig. 7j, the secondary first groove 641 may be arranged in between two tongues 541, 542 that are not equally long. Thus, the secondary depth (either AA or AA2) depends on how the depth is defined. As for the aforementioned measures for the secondary depth, these depths are applicable to the at least one of the depths measured from the bottom of the secondary first groove 641 to a tip of a neighbouring tongue 541, 542. Preferably the measures are applicable to such a secondary depth AA that is measured from a bottom of the secondary first groove 641 to a tip of the longer tongue (541 in Fig. 7j) of the two neighbouring tongues 541, 542.

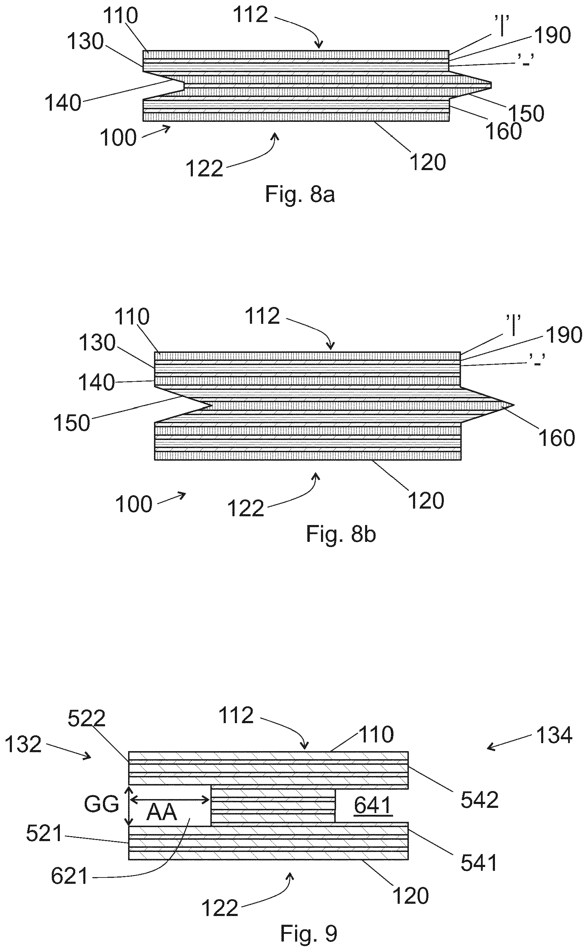

Referring to Fig. 9, in an embodiment, the primary edge surface 132 is provided with a tongue-groove arrangement and a secondary edge surface 134, which is opposite to the primary edge surface 132, is provided with a tongue-groove arrangement. However, the tongue-groove arrangements of the edge surfaces 132, 134 are not matching. In such an embodiment, a separate tongue may be used to mechanically lock the grooves 621, 641 to each other. What has been said about the measures (AA, GG) of the secondary first groove 641 above, applies, to the measures (AA, GG) of the primary first groove 621 .

It has been found that moisture is particularly easily diffused into wood in the fibre direction (i.e. grain direction). The fibre direction refers to direction of fibres in the wood, i.e. typically the direction that is vertical, when the tree, from which the wood is obtained, grows. Therefore, in particular when a tongue of an edge surface comprises wood that has a fibre direction that is parallel to the length of the tongue, the edge surface having the tongue is preferably treated with the hyrdrofobizing agent 310. Therefore, in an embodiment, the primary edge surface 132 comprises the primary first tongue 521, which has the primary length aa. Moreover, the primary first tongue 521 comprises at least a part of a first protruding veneer layer. For example, in Fig. 7c, parts of the veneer layers 110 and 130 are comprised by the primary first tongue 521, whereby the veneer layers 110 and 130 are protruding veneer layers, one of which is the first protruding veneer layer. Moreover, the first protruding veneer layer has such a first fibre direction, that the first fibre direction is unidirectional with the direction of the primary length aa. Moreover, regarding the plywood board 100, such a primary edge surface 132 has been made hydrophobic, or, regarding the method, such a primary edge surface 132 is made hydrophobic by applying the hyrdrofobizing agent 310 or the treatment agent 300 on the primary edge surface 132. This applies also to the embodiments of Figs. 7b and 7d to 7g, even if the reference number(s) for the protruding veneer layer(s) is/are different.

Preferably, the primary first tongue 521 is reasonably thick. Therefore, preferably, the primary first tongue 521 comprises at least a part of a first protruding veneer layer and at least a part of a second protruding veneer layer. Moreover preferably, the primary first tongue 521 further comprises at least a part of a third protruding veneer layer. For example, Figs. 7b and 7c show embodiments, wherein the primary first tongue 521 comprises a part of three protruding veneer layers.

When the tongue comprises at least two protruding veneer layers, the first protruding veneer layer has a first fibre direction and the second protruding veneer layer has a second fibre direction. Fibre directions of the wood veneer layers 110, 120, 130, 140, 150, and 160 are shown in Figs. 8a and 8b. Therein, the reference '|' indicates a fibre direction that is parallel to length or width of the plywood board 100, also indicated by vertical hatching in the Figures. Therein, the reference '-' indicates a fibre direction that is parallel to width or length, respectively, of the plywood board 100, also indicated by horizontal hatching in the Figures. Thus, the fibre direction '|' is perpendicular to the fibre direction '-', which both a perpendicular to the thickness tp of the plywood board 100.

As indicated in Fig. 8a, in an embodiment the first fibre direction (e.g. of the layer 140) is unidirectional with the second fibre direction (e.g. of the layer 150). This may be beneficial in some applications. At least, when the first fibre direction is perpendicular to the primary length aa of the tongue, the tongue, when treated, does not take in moisture as much as in some other configurations and/or without a treatment.

As indicated in Fig. 8b, in an embodiment the first fibre direction (e.g. of the layer 150) is perpendicular to the second fibre direction (e.g. of the layer 160). This may be beneficial in some applications. For example, it seems that moisture induced warping of the tongue is reduced, when the material of the tongue is cross laminated (i.e. first fibre direction is perpendicular to the second fibre direction).

As indicated above, the water contact angle with the primary edge surface 132 is at least 110 degrees. Correspondingly, in an embodiment of the method, the hydrofobizing agent 310 is selected from agents which, when applied onto the primary edge surface 132, increase its (132) hydrofobicity so that the contact angle between the treated primary edge surface 132 and water is at least 110 degrees. Preferably, the primary edge surface 132 is hydrophobic so that the water contact angle with the primary edge surface 132 is at least 125 degrees, such as at least 130 degrees. Correspondingly, in an embodiment, the hydrofobizing agent 310 is selected from agents which, when applied onto the primary edge surface 132, increase its (132) hydrofobicity so that the contact angle between the treated primary edge surface 132 and water is at least 125 degrees, such as at least 130 degrees.

Preferably, the hydrophobizing agent 310 is provided also on the secondary edge surface 134 to increase its hydrophobicity. Thus, in an embodiment, the secondary edge surface 134 is hydrophobic so that the water contact angle with the secondary edge surface 134 is at least 110 degrees; preferably at least 125 degrees or at least 130 degrees.

What has been said about the hydrophobizing agent 310 and/or the treatment agent 300 and/or the amount and concentration thereof in connection with applying the hydrophobizing agent 310 or the treatment agent 300 onto the first surface 112 applies for hyrofobizing the primary edge surface 132, and, if applied, also for hyrofobizing the secondary edge surface 134.

Thus, an embodiment of the method comprises applying said hydrofobizing agent 310 onto the primary edge surface 132 in an amount of 0.1 g/m² to 20 g/m². Preferably, the hydrofobizing agent 310 is applied by applying the treatment agent 300 comprising the hydrofobizing agent 310. Preferably, the treatment agent 300 is an emulsion 300 or aqueous dispersion 300 of the hydrofobizing agent 310. More preferably, the treatment agent 300 is an aqueous emulsion 300 or aqueous dispersion 300 of the hydrofobizing agent 310.

However, more hydrophobizing agent 310 may be used on the edge surface(s) 132, 134 than on the main surface(s) 112, 122. Therefore, in an embodiment a first amount of said hydrophobizing agent 310 is provided on the first surface 112 and a second amount of said hydrophobizing agent 310 is provided on the primary edge surface 132, wherein the second amount is greater than the first amount. The second amount may be e.g. at least 10% or at least 20% greater than the first amount. The first and second amounts may be measured in grams per square metre.

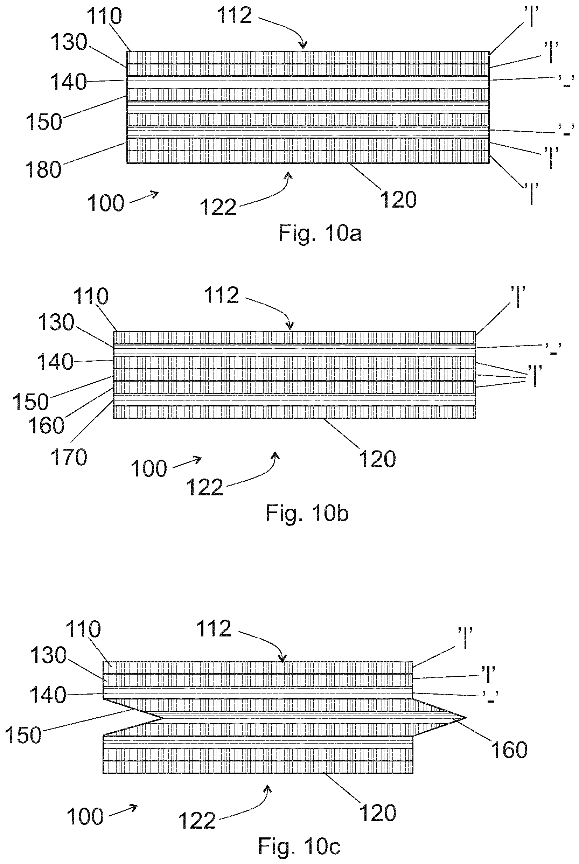

It has been found that moisture induced warping and/or swelling of the whole plywood board 100 and/or a tongue thereof is more intense in such boards 100 and/or tongues that are not cross laminated throughout than in plywood boards that are cross laminated throughout. Correspondingly, protecting at least such plywood panels that are not cross laminated throughout is important. However, protecting also such plywood panels that are cross laminated throughout may be important. Figs. 10a to 10e show embodiments of plywood boards that are not cross laminated throughout. The boards of these Figures are also only partly cross laminated. The same convention for showing the fibre direction is used in Figs. 10a to 10e as in Figs. 8a and 8b (see above). In these types of plywood boards, the moisture induced warping and/or swelling is more prominent, since such neighbouring veneers that have the same fibre direction warp and/or swell in a similar manner. Therefore swelling is intense. Moreover, typically in such boards, the number of veneers having a fibre direction to a first direction is significantly different from the number of veneers having a fibre direction to a second, perpendicular, direction. This also intensifies the warping and/or swelling of the whole plywood board 100 and/or a tongue thereof.

In an embodiment of the aforementioned method, a plywood board that is not cross laminated throughout is treated with the hydrophobizing agent 310. Correspondingly, an embodiment of a treated plywood board is not is not cross laminated throughout. Herein plywood board 100 that is not cross laminated throughout comprises a primary veneer having a primary fibre direction and a secondary veneer having a secondary fibre direction, wherein the primary fibre direction is unidirectional with the secondary fibre direction and the secondary veneer is a neighbouring veneer to the primary veneer. Herein the term neighbouring veneer to the primary veneer refers to such a veneer that no other veneer is left in between the neighbouring veneer and the primary veneer.

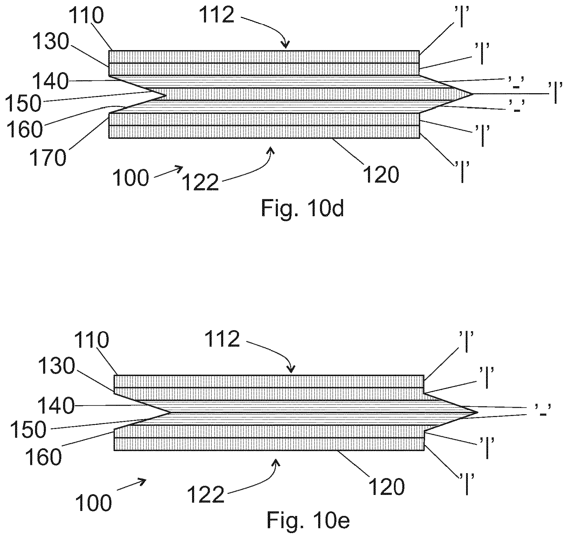

As an example, in Fig. 10a, any one of the veneers 110, 130, 120, and 180 may be considered as the primary veneer, since each one of them has one neighbouring veneer that has the same fibre direction. Also more generally, in an embodiment the fibre direction of the first veneer 110 (i.e. a surface veneer) is unidirectional with the fibre direction of the neighbouring (one) veneer (e.g. 130). Moreover the fibre direction of the second veneer 120 (i.e. another surface veneer) is unidirectional with the fibre direction of the neighbouring (one) veneer (e.g. 180). This applies also in the embodiments of Figs. 10d and 10e. It is noted that, for clarity, the adhesive 190 is not shown in Figs. 10a to 10e.

As an example, in Fig. 10b, any one of the veneers 140, 150, and 160 may be considered as the primary veneer, since each one of them has at least one neighbouring veneer that has the same fibre direction. The layers 140 and 160 have only one neighbouring veneer layer with the same fibre direction, while the layer 150 has two neighbouring veneer layer with the same fibre direction. In the embodiment of Fig. 10b all the veneers 140, 150, and 160 furthermore have two neighbouring veneer layers.

An edge surface 132 or edge surfaces 134 of a plywood board 100 that is not cross laminated throughout (e.g. is partly cross laminated) may be provided with a tongue and a groove as discussed above and illustrated in Figs. 7a to 7j. As an example, Fig. 10c shows the board of Fig. 10a when the edge surfaces are provided with tongues and grooves as in Fig. 7e or 8b.

In an embodiment of the aforementioned method, a plywood board that is only partly cross laminated is treated with the hydrophobizing agent 310. Correspondingly in an embodiment a plywood board that is only partly cross laminated has been treated with the hydrophobizing agent 310. A plywood board that is only partly cross laminated is
- not cross laminated throughout (see above for more details) and
- partly cross laminated.

Herein the plywood board 100 that is partly cross laminated comprises a primary veneer having a primary fibre direction and a tertiary veneer having a tertiary fibre direction, wherein the primary fibre direction is perpendicular to the tertiary fibre direction and the tertiary veneer is a neighbouring veneer to the primary veneer. Herein the term neighbouring veneer to the primary veneer refers to such a veneer that no other veneer is left in between the neighbouring veneer and the primary veneer.

As an example, in Fig. 10a, either one of the veneers 130 and 180 may be considered as the primary veneer, since each one of them has one neighbouring veneer that has the same fibre direction and another veneer that has a perpendicular fibre direction. As an example, in Fig. 10b, either one of the veneers 140 and 160 may be considered as the primary veneer, since each one of them has one neighbouring veneer that has the same fibre direction and another veneer that has a perpendicular fibre direction.

Figures 10d and 10e show embodiments comprising six (Fig. 10e) or seven (Fig. 10d) veneers. In the embodiments of Figs. 10d and 10e the fibre direction of the first veneer 110 (i.e. a surface veneer) is unidirectional with the fibre direction of the neighbouring (one) veneer 130 thereof. Moreover the fibre direction of the second veneer 120 (i.e. another surface veneer) is unidirectional with the fibre direction of the neighbouring (one) veneer (160 or 170) thereof. Moreover, the plywood boards of the Figs. 10d and 10e are only partly cross laminated. Furthermore, a primary edge surface is provided with a groove and a tongue, and the opposite, secondary, edge surface is provided with a tongue and a groove.

Naturally, the plywood board 100 may be cross laminated throughout. An example is given in Fig. 8b. A plywood board that is cross laminated throughout only comprises such veneers, of which fibre direction is perpendicular to the fibre direction of the only neighbouring veneer (in case of a surface veneer) or the neighbouring two veneers (in case of an intermediate veneer).

### Measurement results

Boards treated according to the above described method, not necessarily according to the invention, were tested to confirm their moisture buffering value. Untreated spruce plywood was used as a reference sample (sample 1). Paraffin wax (samples 2, 3 and 4) and coniferous wood rosin (sample 5) were used as the hydrofobizing agent. The amount of hydrofobizing agent was from 3 g/m² to 12 g/m², depending on the sample. The treatment had no observed effect on the moisture buffering value, as is shown in Table 1. However, the treatment increased the hydrofobicity of the surface, as is shown in Table 1. Table 1 shows the moisture buffering values (MBV) and water contact angles for the above mentioned samples, measured as presented above.

**Table 1: Surface properties of plywood boards treated by the method.**

| Sample | MBV, g/m²%RH | Contact angle, ° |
|---|---|---|
| 1 (Ref.) | 0.59 | 124 |
| 2 | 0.54 | 131 |
| 3 | 0.46 | 132 |
| 4 | 0.46 | 135 |
| 5 | 0.64 | 134 |

As shown by samples 2 to 5, the substance and/or the amount applied has an effect on breathability. In samples 2 to 4, the hydrofobic agent 310 is the same. However, only samples 3 and 4 showed a reduction in breathability to a value of 0.46 g/m²%RH which, however, in the accuracy of one significant figure, is still 0.5 g/m²%RH which can be considered sufficient breathability. For the sample 5, the breathability was slightly better.

As can be seen from the samples 2 to 5, the substance and/or the amount used affects particularly the hydrofobicity, that is, the contact angle. All the treated samples were more hydrophobic than the untreated sample (that is, the contact angle was greater). In the light of these measurements, a treated surface and an untreated surface are distinguished by, among other things, the contact angle. The borderline in the contact angle between the untreated and treated surfaces will be, for example, 125 degrees or 130 degrees.

In all the samples 1 to 5, the first surface 112 was sanded. The roughness of the first surface 112 was between 6 µm and 12 µm.

In order to test, how the hydrofobizing agent functions on the primary edge surface 132, hydrofobizing agent 310 was applied onto a primary edge surface 132 of a plywood board 100 in the form of a treatment agent 300. More precisely, 7 g/m² of wood based hydrofobizing agent 310 was applied onto a part of the primary edge surface 132 of plywood boards 100. For comparative reasons, a part of the primary edge surface 132 of the plywood boards 100 were left untreated. The hydrofobizing agent 310 was coniferous wood rosin, which was applied in the form of an aqueous dispersion thereof (i.e. in the form of the treatment agent 300). After the treatment, a droplet of water was applied onto the treated part of the primary edge surface 132, and the time for the plywood board to take in the droplet was measured. The mass of the droplet was 50 mg. The test was carried out on nine samples. In each one of the tests, it took over 20 minutes for a treated part of the primary edge surface 132 of the plywood board 100 to take in the water droplet. To compare the these results with untreated plywood boards, same size of water droplets were applied onto untreated parts of the primary edge surfaces. In these cases it took from 13 to 69 seconds for the untreated part of the primary edge surface 132 to take in the water droplet. The average time was 27 seconds. The tests were carried out at room temperature (23 °C) and the water was tap water. These results indicate that water intake is at least forty times slower for treated edge surfaces than for untreated edge surfaces.

To test swelling, plywood boards with a treated edge surface and plywood boards with a untreated edge surface were placed on a wet clothing, the edge surface facing the clothing. Swelling of the tongue, in terms of the thickness gg (see Fig. 7b), and as function of time, was measured. The thickness gg was measured from five different locations within each tongue. The tests were carried out at room temperature (23 °C) and the water was tap water. After 5 minutes, the swelling of the untreated tongues was from 1.5 % to 3.4 %, the average being 2.3 %. In comparison, after 5 minutes, the swelling of the treated tongues was from 0.17 % to 0.39 %, the average being 0.26 %. Moreover, after 20 minutes, the swelling of the untreated tongues was from 2.8 % to 5.4 %, the average being 4.3 %. In comparison, after 20 minutes, the swelling of the treated tongues was from 0.38 % to 0.56 %, the average being 0.46 %. These number indicate that the moisture induced swelling of the treated tongue is only about one tenth of the moisture induced swelling of the untreated tongue.

## Claims

1. A method for treating a plywood board (100), comprising
- providing
• a plywood board (100) comprising a first (110) and a second wood veneer layer (120), adhesive (190) between the wood veneer layers (110, 120, 130, 140, 150), a first surface (112) whose normal (N) is unidirectional with the thickness (tp) of the plywood board (100), and a second surface (122) opposite to the first surface (112); and
• hydrofobizing agent (310), wherein
• the first surface (112) of the plywood board (100) has been sanded or is sanded to a roughness which, expressed in Ra -value, is 2 µm or more; and
- applying treatment agent (300) comprising hydrofobizing agent (310) onto at least the first surface (112) of the plywood board (100), wherein
- the first surface (112) has a roughness, expressed in Ra -value, from 2 µm to 20 µm,
- the treatment agent (300) is an aqueous dispersion or emulsion of the hydrofobizing agent (310),
- the hydrofobization agent (310) is tall oil (such as crude tall oil or distilled tall oil), tall oil fatty acid, tall oil soap, or coniferous wood rosin, which may be chemically fortified, modified or saponified, and
- the hydrofobizing agent (310) is applied onto the first surface (112) in an amount of 0.1 g/m² to 20 g/m² in said aqueous emulsion (300) or aqueous dispersion (300), the method thereby comprising
- applying hydrofobizing agent (310) onto the first surface (112) in such an amount that the moisture buffering value (MBV) of the treated plywood board (100), measured according to the Nordtest guideline, is at least 0.5 g/(m²%RH).

2. The method according to claim 1, comprising
- applying hydrofobizing agent (310) onto the first and second surfaces (112, 122) of the plywood board (100).

3. The method according to claim 1 or 2, wherein
- the plywood board (100) comprises a primary edge surface (132), the method comprising
- applying the treatment agent (300) comprising the hydrofobizing agent (310) onto at least the primary edge surface (132) of the plywood board (100).

4. The method according to the claim 3, comprising
- applying the hydrofobizing agent (310) onto the primary edge surface (132) in an amount of 0.1 g/m² to 20 g/m² in said aqueous emulsion (300) or aqueous dispersion (300).

5. The method of any of the claims 1 to 4, wherein
- the content of the hydrofobizing agent (310) in said aqueous emulsion (300) or aqueous dispersion (300) is from 1 wt-% to 50 wt-%.

6. The method according to any of the claims 1 to 5, wherein
- the hydrofobizing agent (310) is selected from agents which, when applied onto the first surface (112) and/or onto the primary edge surface (132), increase its (112, 132) hydrofobicity so that the contact angle between the treated surface (112, 132) and water is at least 110 degrees.

7. The method according to any of the claims 1 to 6, comprising
- spraying the treatment agent (300) onto the first surface (112) and/or onto the primary edge surface (132).

8. Plywood board (100) comprising
- a first wood veneer layer (110) and a second wood veneer layer (120),
- adhesive (190) between the wood veneer layers (110, 120, 130, 140, 150),
- a first surface (112), whose normal (N) is unidirectional with the thickness (tp) of the plywood board (100), and
- a second surface (122) opposite to the first surface,
**characterized in that**
- the first surface (112) has been sanded or is sanded to a roughness which, expressed in Ra -value, is 2 µm or more,
- the roughness of the first surface (112), expressed in Ra value, is from 2 µm to 20 µm, and
- a hydrophobizing agent (310) is provided on the first surface (112) in an amount of 0.1 g/m² to 20 g/m² to increase its hydrophobicity, wherein
- the hydrofobization agent (310) is tall oil (such as crude tall oil or distilled tall oil), tall oil fatty acid, tall oil soap, or coniferous wood rosin, which may be chemically fortified, modified or saponified,
- the first surface (112) is hydrophobic so that the water contact angle with the first surface (112) is at least 110 degrees, and
- the moisture buffering value (MBV) of the plywood board (100), measured according to the Nordtest guideline (ISBN 87-7877-195-1), is at least 0.5 g/(m²%RH), with the accuracy of one significant figure.

9. The plywood board (100) of the claim 8, comprising
- a primary edge surface (132), wherein
- the hydrophobizing agent (310) is provided on the primary edge surface (132) to increase its hydrophobicity, wherein
- the primary edge surface (132) is hydrophobic so that the water contact angle with the primary edge surface (132) is at least 110 degrees.

10. The method or the plywood board (100) of any of the claims 1 to 9, wherein
- the hydrofobizing agent (310) is provided [A] on the first surface (112) or surfaces (112, 122) and/or [B] onto the primary edge surface (132) in the form or micro or nano particles.

11. The method or the plywood board (100) of any of the claims 1 to 10, wherein
- the hydrofobization agent (310) is coniferous wood rosin based substance, such as coniferous wood rosin or a derivative thereof, such as fortified, modified, or saponified coniferous wood rosin.

12. The method or the plywood board (100) of any of the claims 1 to 11, wherein
- the plywood board (100) comprises a primary edge surface (132), and
- the primary edge surface (132) is provided with a primary first groove (621) and a primary first tongue (521).

13. The method or the plywood board (100) of the claim 12, wherein
- the plywood board (100) comprises a secondary edge surface (134) opposite to the primary edge surface (132),
- the primary edge surface (132) is provided with a primary second groove (622),
- the primary first tongue (521) is arranged in between the primary first groove (621) and the primary second groove (622),
- the secondary edge surface (134) is provided with a secondary first tongue (541), a secondary second tongue (542), and a secondary first groove (641), and
- the secondary first groove (641) is arranged in between the secondary first tongue (541) and the secondary second tongue (542).

14. The method or the plywood board (100) of the claim 13, wherein
- the primary first tongue (521) has a primary length (aa) and a primary thickness (gg),
- the secondary first groove (641) has a secondary depth (AA) and a secondary height (GG),
- the primary length (aa) is from 8 to 45 mm, and
- the secondary depth (AA) is from 8 to 45 mm.

15. The method or the plywood board (100) of any of the claims 1 to 14, wherein
- the plywood board (100) is cross laminated throughout or the plywood board (100) is not cross laminated throughout.

16. The method or the plywood board (100) of claim 15, wherein
- the plywood board (100) is only partly cross laminated.

## Patentansprüche

1. Verfahren zum Behandeln einer Sperrholzplatte (100), umfassend:
- Bereitstellen
• von einer Sperrholzplatte (100) mit einer ersten (110) und einer zweiten Holzfurnierschicht (120), Klebstoff (190) zwischen den Holzfurnierschichten (110, 120, 130, 140, 150), einer ersten Oberfläche (112), deren die Normale (N) unidirektional mit der Dicke (tp) der Sperrholzplatte (100) ist, und einer zweiten Oberfläche (122) gegenüber der ersten Oberfläche (112); und
• von Hydrophobierungsmittel (310), wobei
• die erste Oberfläche (112) der Sperrholzplatte (100) geschliffen oder auf eine Rauheit geschliffen wurde, die, ausgedrückt als Ra-Wert, 2 µm oder mehr beträgt; und
- Auftragen eines Behandlungsmittels (300), das ein Hydrophobierungsmittel (310) umfasst, auf mindestens die erste Oberfläche (112) der Sperrholzplatte (100), wobei
- die erste Oberfläche (112) eine Rauhigkeit, ausgedrückt als Ra-Wert, von 2 µm bis 20 µm aufweist,
- das Behandlungsmittel (300) eine wässrige Dispersion oder Emulsion des Hydrophobierungsmittels (310) ist,
- das Hydrofobisierungsmittel (310) Tallöl (wie rohes Tallöl oder destilliertes Tallöl), Tallölfettsäure, Tallölseife oder Nadelholzkolophonium ist, die chemisch angereichert, modifiziert oder verseift sein können, und
- das Hydrophobierungsmittel (310) auf die erste Oberfläche (112) in einer Menge von 0,1 g/m² bis 20 g/m² in der wässrigen Emulsion (300) oder wässrigen Dispersion (300) aufgebracht wird, wobei das Verfahren dadurch Folgendes umfasst:
- Auftragen von Hydrophobierungsmittel (310) auf die erste Oberfläche (112) in einer solchen Menge, dass der Feuchtigkeitspufferwert (MBV) der behandelten Sperrholzplatte (100), gemessen nach der Nordtest-Richtlinie, mindestens 0,5 g/(m²%RH) beträgt.

2. Verfahren nach Anspruch 1, umfassend
- Auftragen von Hydrophobierungsmittel (310) auf die erste und zweite Oberfläche (112, 122) der Sperrholzplatte (100).

3. Verfahren nach Anspruch 1 oder 2, wobei
- die Sperrholzplatte (100) eine primäre Kantenoberfläche (132) umfasst, wobei das Verfahren Folgendes umfasst:
- Auftragen des Behandlungsmittels (300), das das Hydrophobierungsmittel (310) umfasst, auf mindestens die primäre Kantenoberfläche (132) der Sperrholzplatte (100) .

4. Verfahren nach Anspruch 3, umfassend:
- Auftragen des Hydrophobierungsmittels (310) auf die primäre Kantenoberfläche (132) in einer Menge von 0,1 g/m² bis 20 g/m² in der wässrigen Emulsion (300) oder wässrigen Dispersion (300).

5. Verfahren nach einem der Ansprüche 1 bis 4, wobei
- der Gehalt des Hydrophobierungsmittels (310) in der wässrigen Emulsion (300) oder wässrigen Dispersion (300) 1 Gew.-% bis 50 Gew.-% beträgt.

6. Verfahren nach einem der Ansprüche 1 bis 5, wobei
- das Hydrophobierungsmittel (310) ausgewählt ist aus Mitteln, die beim Auftragen auf die erste Oberfläche (112) und/oder auf die primäre Kantenoberfläche (132) dessen Hydrophobie (112, 132) erhöhen, so dass der Kontaktwinkel zwischen der behandelten Oberfläche (112, 132) und Wasser mindestens 110 Grad beträgt.

7. Verfahren nach einem der Ansprüche 1 bis 6, umfassend:
- Aufsprühen des Behandlungsmittels (300) auf die erste Oberfläche (112) und/oder auf die primäre Kantenoberfläche (132).

8. Sperrholzplatte (100) umfassend
- eine erste Holzfurnierschicht (110) und eine zweite Holzfurnierschicht (120),
- Klebstoff (190) zwischen den Holzfurnierschichten (110, 120, 130, 140, 150),
- eine erste Oberfläche (112), deren Normale (N) unidirektional mit der Dicke (tp) der Sperrholzplatte (100) ist, und
- eine zweite Oberfläche (122) gegenüber der ersten Oberfläche,
**dadurch gekennzeichnet, dass**
- die erste Oberfläche (112) geschliffen oder auf eine Rauheit geschliffen wurde, die, ausgedrückt als Ra-Wert, 2 µm oder mehr beträgt,
- die Rauheit der ersten Oberfläche (112), ausgedrückt als Ra-Wert, 2 µm bis 20 µm beträgt und
- ein Hydrophobierungsmittel (310) auf der ersten Oberfläche (112) in einer Menge von 0,1 g/m² bis 20 g/m² bereitgestellt wird, um seine Hydrophobie zu erhöhen, wobei
- das Hydrofobisierungsmittel (310) Tallöl (wie rohes Tallöl oder destilliertes Tallöl), Tallölfettsäure, Tallölseife oder Nadelholzkolophonium ist, die chemisch angereichert, modifiziert oder verseift sein können,
- die erste Oberfläche (112) hydrophob ist, so dass der Wasserkontaktwinkel mit der ersten Oberfläche (112) mindestens 110 Grad beträgt, und
- der Feuchtigkeitspufferwert (MBV) der Sperrholzplatte (100), gemessen nach der Nordtest-Richtlinie (ISBN 87-7877-195-1), mindestens 0,5 g/(m²%RH) mit einer Genauigkeit von einer signifikanten Zahl beträgt.

9. Sperrholzplatte (100) nach Anspruch 8, umfassend
- eine primäre Kantenfläche (132), wobei
- das Hydrophobierungsmittel (310) auf der primären Kantenfläche (132) vorgesehen ist, um deren Hydrophobie zu erhöhen, wobei
- die primäre Kantenoberfläche (132) hydrophob ist, so dass der Wasserkontaktwinkel mit der primären Kantenoberfläche (132) mindestens 110 Grad beträgt.

10. Verfahren oder Sperrholzplatte (100) nach einem der Ansprüche 1 bis 9, wobei
- das Hydrofobisierungsmittel (310) [A] auf der ersten Oberfläche (112) oder Oberflächen (112, 122) und/oder [B] auf der primären Kantenoberfläche (132) in Form von Mikro- oder Nanopartikeln bereitgestellt wird.

11. Verfahren oder Sperrholzplatte (100) nach einem der Ansprüche 1 bis 10, wobei
- das Hydrofobisierungsmittel (310) ein Stoff auf der Basis von Nadelholzkolophonium ist, wie Nadelholzkolophonium oder ein Derivat davon, wie angereichertes, modifiziertes oder verseiftes Nadelholzkolophonium.

12. Verfahren oder Sperrholzplatte (100) nach einem der Ansprüche 1 bis 11, wobei
- die Sperrholzplatte (100) eine primäre Kantenfläche (132) umfasst, und
- die primäre Kantenfläche (132) mit einer primären ersten Nut (621) und einer primären ersten Zunge (521) versehen ist.

13. Verfahren oder Sperrholzplatte (100) nach Anspruch 12, wobei
- die Sperrholzplatte (100) eine sekundäre Kantenfläche (134) gegenüber der primären Kantenfläche (132) umfasst,
- die primäre Kantenfläche (132) mit einer primären zweiten Nut (622) versehen ist,
- die primäre erste Zunge (521) zwischen der primären ersten Nut (621) und der primären zweiten Nut (622) angeordnet ist,
- die sekundäre Kantenfläche (134) mit einer sekundären ersten Zunge (541), einer sekundären zweiten Zunge (542) und einer sekundären ersten Nut (641) versehen ist, und
- die sekundäre erste Nut (641) zwischen der sekundären ersten Zunge (541) und der sekundären zweiten Zunge (542) angeordnet ist.

14. Verfahren oder Sperrholzplatte (100) nach Anspruch 13, wobei
- die primäre erste Zunge (521) eine primäre Länge (aa) und eine primäre Dicke (gg) hat,
- die sekundäre erste Nut (641) eine sekundäre Tiefe (AA) und eine sekundäre Höhe (GG) hat,
- die Primärlänge (aa) 8 bis 45 mm beträgt, und
- die sekundäre Tiefe (AA) 8 bis 45 mm beträgt.

15. Verfahren oder Sperrholzplatte (100) nach einem der Ansprüche 1 bis 14, wobei
- die Sperrholzplatte (100) durchgängig kreuzverleimt ist, oder die Sperrholzplatte (100) nicht durchgängig kreuzverleimt ist.

16. Verfahren oder Sperrholzplatte (100) nach Anspruch 15, wobei
- die Sperrholzplatte (100) nur teilweise kreuzverleimt ist.

## Revendications

1. Procédé de traitement d'un panneau de contreplaqué (100), comprenant
- la fourniture
• d'un panneau de contreplaqué (100) comprenant une première (110) et une seconde couche de placage de bois (120), un adhésif (190) entre les couches de placage de bois (110, 120, 130, 140, 150), une première surface (112) dont la normale (N) est unidirectionnelle avec l'épaisseur (tp) du panneau de contreplaqué (100), et une seconde surface (122) opposée à la première surface (112) ; et
• d'un agent d'hydrophobation (310), dans lequel
• la première surface (112) du panneau de contreplaqué (100) a été poncée ou est poncée à une rugosité qui, exprimée en valeur Ra, est de 2 µm ou plus ; et
- l'application d'un agent de traitement (300) comprenant un agent d'hydrophobation (310) sur au moins la première surface (112) du panneau de contreplaqué (100), dans lequel
- la première surface (112) a une rugosité, exprimée en valeur Ra, de 2 µm à 20 µm,
- l'agent de traitement (300) est une dispersion ou une émulsion aqueuse de l'agent d'hydrophobation (310),
- l'agent d'hydrophobation (310) est de l'huile de tall (telle que de l'huile de tall brute ou de l'huile de tall distillée), un acide gras d'huile de tall, du savon d'huile de tall ou de la résine de bois de conifère, qui peut être chimiquement fortifié, modifié ou saponifié, et
- l'agent d'hydrophobation (310) est appliqué sur la première surface (112) en une quantité de 0,1 g/m² à 20 g/m² dans ladite émulsion aqueuse (300) ou dispersion aqueuse (300), le procédé comprenant ainsi
- l'application d'un agent d'hydrophobation (310) sur la première surface (112) en une quantité telle que la valeur tampon d'humidité (MBV) du panneau de contreplaqué (100) traité, mesurée selon la directive Nordtest, est d'au moins 0,5 g/(m²%RH).

2. Procédé selon la revendication 1, comprenant
- l'application d'un agent d'hydrophobation (310) sur les première et seconde surfaces (112, 122) du panneau de contreplaqué (100).

3. Procédé selon la revendication 1 ou 2, dans lequel
- le panneau de contreplaqué (100) comprend une surface de bord primaire (132), le procédé comprenant
- l'application de l'agent de traitement (300) comprenant l'agent d'hydrophobation (310) sur au moins la surface de bord primaire (132) du panneau de contreplaqué (100).

4. Procédé selon la revendication 3, comprenant
- l'application de l'agent d'hydrophobation (310) sur la surface de bord primaire (132) en une quantité de 0,1 g/m² à 20 g/m² dans ladite émulsion aqueuse (300) ou dispersion aqueuse (300).

5. Procédé selon l'une quelconque des revendications 1 à 4, dans lequel
- la teneur de l'agent d'hydrophobation (310) dans ladite émulsion aqueuse (300) ou dispersion aqueuse (300) est de 1 % en poids à 50 % en poids.

6. Procédé selon l'une quelconque des revendications 1 à 5, dans lequel
- l'agent d'hydrophobation (310) est choisi parmi les agents qui, lorsqu'ils sont appliqués sur la première surface (112) et/ou sur la surface de bord primaire (132), augmentent son hydrofobicité (112, 132) de sorte que l'angle de contact entre la surface traitée (112, 132) et l'eau est d'au moins 110 degrés.

7. Procédé selon l'une quelconque des revendications 1 à 6, comprenant
- la pulvérisation de l'agent de traitement (300) sur la première surface (112) et/ou sur la surface de bord primaire (132).

8. Panneau de contreplaqué (100) comprenant
- une première couche de placage de bois (110) et une seconde couche de placage de bois (120),
- un adhésif (190) entre les couches de placage de bois (110, 120, 130, 140, 150),
- une première surface (112), dont la normale (N) est unidirectionnelle avec l'épaisseur (tp) du panneau de contreplaqué (100), et
- une seconde surface (122) opposée à la première surface,
**caractérisé en ce que**
- la première surface (112) a été poncée ou est poncée à une rugosité qui, exprimée en valeur Ra, est de 2 µm ou plus,
- la rugosité de la première surface (112), exprimée en valeur Ra, est de 2 µm à 20 µm, et
- un agent d'hydrophobation (310) est prévu sur la première surface (112) en une quantité de 0,1 g/m² à 20 g/m² pour augmenter son hydrophobie, dans lequel
- l'agent d'hydrophobation (310) est de l'huile de tall (telle que de l'huile de tall brute ou de l'huile de tall distillée), un acide gras d'huile de tall, du savon d'huile de tall ou de la résine de bois de conifère, qui peut être chimiquement fortifié(e), modifié(e) ou saponifié(e),
- la première surface (112) est hydrophobe de sorte que l'angle de contact de l'eau avec la première surface (112) est d'au moins 110 degrés, et
- la valeur tampon d'humidité (MBV) du panneau de contreplaqué (100), mesurée selon la directive Nordtest (ISBN 87-7877-195-1), est d'au moins 0,5 g/(m²%RH), avec une précision d'un chiffre significatif.

9. Panneau de contreplaqué (100) selon la revendication 8, comprenant
- une surface de bord primaire (132), dans lequel
- l'agent d'hydrophobation (310) est prévu sur la surface de bord primaire (132) pour augmenter son hydrophobie, dans lequel
- la surface de bord primaire (132) est hydrophobe de sorte que l'angle de contact de l'eau avec la surface de bord primaire (132) est d'au moins 110 degrés.

10. Procédé ou panneau de contreplaqué (100) selon l'une quelconque des revendications 1 à 9, dans lequel
- l'agent d'hydrophobation (310) est fourni [A] sur la première surface (112) ou les surfaces (112, 122) et/ou [B] sur la surface de bord primaire (132) sous la forme de micro ou de nano particules.

11. Procédé ou panneau de contreplaqué (100) selon l'une quelconque des revendications 1 à 10, dans lequel
- l'agent d'hydrophobation (310) est une substance à base de résine de bois de conifère, telle que la résine de bois de conifère ou un dérivé de celle-ci, telle que la résine de bois de conifère fortifiée, modifiée ou saponifiée.

12. Procédé ou panneau de contreplaqué (100) selon l'une quelconque des revendications 1 à 11, dans lequel
- le panneau de contreplaqué (100) comprend une surface de bord primaire (132), et
- la surface de bord primaire (132) est pourvue d'une première rainure primaire (621) et d'une première languette primaire (521).

13. Procédé ou panneau de contreplaqué (100) selon la revendication 12, dans lequel
- le panneau de contreplaqué (100) comprend une surface de bord secondaire (134) opposée à la surface de bord primaire (132),
- la surface de bord primaire (132) est pourvue d'une seconde rainure primaire (622),
- la première languette primaire (521) est disposée entre la première rainure primaire (621) et la seconde rainure primaire (622),
- la surface de bord secondaire (134) est pourvue d'une première languette secondaire (541), d'une seconde languette secondaire (542) et d'une première rainure secondaire (641), et
- la première rainure secondaire (641) est disposée entre la première languette secondaire (541) et la seconde languette secondaire (542).

14. Procédé ou panneau de contreplaqué (100) selon la revendication 13, dans lequel
- la première languette primaire (521) a une longueur primaire (aa) et une épaisseur primaire (gg),
- la première rainure secondaire (641) a une profondeur secondaire (AA) et une hauteur secondaire (GG),
- la longueur primaire (aa) est de 8 à 45 mm, et
- la profondeur secondaire (AA) est de 8 à 45 mm.

15. Procédé ou panneau de contreplaqué (100) selon l'une quelconque des revendications 1 à 14, dans lequel
- le panneau de contreplaqué (100) est entièrement stratifié en croix ou le panneau de contreplaqué (100) n'est pas entièrement stratifié en croix.

16. Procédé ou panneau de contreplaqué (100) selon la revendication 15, dans lequel
- le panneau de contreplaqué (100) n'est que partiellement stratifié en croix.
